**Europäisches Patentamt**

**European Patent Office**

**Office européen des brevets**

(19)

(11) Veröffentlichungsnummer: **0 088 876**
**B1**

(12) # EUROPÄISCHE PATENTSCHRIFT

(45) Veröffentlichungstag der Patentschrift: 26.11.86

(51) Int. Cl.⁴: **B 60 C 11/00**

(21) Anmeldenummer: **83100987.3**

(22) Anmeldetag: **03.02.83**

(54) **Fahrzeugluftreifen.**

(30) Priorität: **13.03.82 DE 8207051 U**

(43) Veröffentlichungstag der Anmeldung:
**21.09.83 Patentblatt 83/38**

(45) Bekanntmachung des Hinweises auf die Patenterteilung:
**26.11.86 Patentblatt 86/48**

(84) Benannte Vertragsstaaten:
**AT BE CH DE FR GB IT LI NL SE**

(56) Entgegenhaltungen:
**DE-A-1 480 889**
**DE-A-2 921 378**
**DE-A-2 941 852**
**DE-A-3 118 406**
**DE-A-3 118 408**
**GB-A-867 556**
**GB-A-1 188 287**
**LU-A-58 967**
**US-A-2 302 027**

(73) Patentinhaber: **Continental Gummi- Werke Aktiengesellschaft, Königsworther Platz 1, D-3000 Hannover 1 (DE)**

(72) Erfinder: **Burchert, Helmut, Dr. Ing., Brillantweg 4, D-3008 Garbsen 1 (DE)**
Erfinder: **Groh, Walter, Ostpreussenstrasse 13, D-3200 Hildesheim (DE)**
Erfinder: **Grollich, Ekkehard, Ing. grad., Am Winkelberge 8, D-3008 Garbsen 2 (DE)**
Erfinder: **Hettling, Klaus, Ing. grad., Klosterweg 17, D-3008 Garbsen 2 (DE)**

LIBER, STOCKHOLM 1986

## Beschreibung

Die Erfindung betrifft einen Fahrzeugluftreifen mit einem profilierten Laufstreifen, dessen Profilelemente (Blöcke) mit wellenförmigen Feineinschnitten versehen sind, wobei sich die Profilelemente und die Feineinschnitte quer zur Laufrichtung des Reifens erstrecken und die Endabschnitte der Feineinschnitte eine sich allmählich verringernde Tiefe haben und sich ausschließlich im Bereich der Schulter des Reifens befinden.

Bei bekannten Fahrzeugluftreifen dieser Ausbildung (DE-OS 29 21 378) sind die mit den Feineinschnitten versehenen Schultern nach Art eines Kegelstumpfmantels geformt. Die Lauffläche ist damit beidseitig scharf begrenzt, und die so ausgeführte Reifenschulter soll aufgrund der hier befindlichen Feineinschnitte die Fähigkeit haben, beim Vorhandensein von Spurrillen in der Fahrbahn die Fahrbahn ohne weiteres wechseln zu können (Vermeidung des Wander-Phänomens).

Es ist bei Fahrzeugluftreifen weiterhin bekannt (DE-OS 14 80 889), in der Lauffläche angeordnete Feineinschnitte so auszuführen, daß deren Tiefe an einer oder mehreren Stellen etwa um die, Hälfte verrin ert ist. Hierdurch soll eine zu starke Verformung der den Feineinschnitten benachbarten Teile der Lauffläche verhindert werden.

Demgegenüber liegt der Erfindung die Aufgabe zugrunde, bei Reifen der eingangs erwähnten Art die Standfestigkeit und Haltbarkeit der Rundschultern zu erhöhen, die günstige Wirkung der Feineinschnitte im Bereich der Rundschultern aber zu erhalten.

Zur Lösung dieser Aufgabe ist erfindungsgemäß bei einem Reifen mit Rundschultern die Tiefe der Feineinschnitte an den Laufflächenrändern dadurch verringert, daß der Grund der Feineinschnitte an dieser Stelle angehoben ist.

Durch die verringerte Tiefe der Feineinschnitte im Bereich der Rundschultern an den Laufflächenrändern und die Anhebung des Grundes der Feineinschnitte an dieser Stelle wird eine gesteigerte Standfestigkeit und damit auch eine Verbesserung der Haltbarkeit der Rundschultern erzielt. Da aber die Feineinschnitte die Rundschultern durchsetzen, können sie zur Erhöhung der Rutschsicherheit beitragen. Zugleich verhindert die Anhebung des Grundes der Feineinschnitte am Rand der Lauffläche eine zu große Verformung. Damit wird auch das Abnutzungsbild verbessert und die Abnutzung gleichmäßig.

Ein Ausführungsbeispiel der Erfindung wird anhand der Zeichnung erläutert.

Weitere Einzelheiten der Neuerung werden anhand der Zeichnung dargestellt.

Es zeigen:

Fig. 1 eine Teildraufsicht auf die Lauffläche eines für die Winterverwendung geeigneten Laufstreifens,

Fig. 2 einen radialen Teilschnitt durch die Schulterpartie des Reifens gemäß Fig. 1.

Die aktive Lauffläche 1 mit der Breite B erstreckt sich in den Bereich der Blockreihe 2, welche aus in Reifenumfangsrichtung aufeinanderfolgenden Blöcken 3 bestehen, die ihrerseits durch querverlaufende Nuten 4 und gegenüber dem Laufflächenmittelbereich durch eine zickzackförmige Umfangsnut 5 getrennt sind. Aus diesem Grunde sind die im Grundriß etwa rechteckigen Blöcke 3 an ihrem der Laufflächenmitte zugekehrten Ende bei 6 spitzverlaufend ausgeführt.

Die Blöcke 3 weisen je zwei ggfs. aber auch drei im wesentlichen querverlaufende Feineinschnitte 7 auf, die eine Breite von etwa 0,5 mm haben und sich über die eigentliche Lauffläche hinaus bis in den Bereich der Rundschultern 8 erstrecken. Die Feineinschnitte 7 sind zickzackförmig verlaufend ausgeführt. An ihren Enden erstrecken sie sich jedoch gerade.

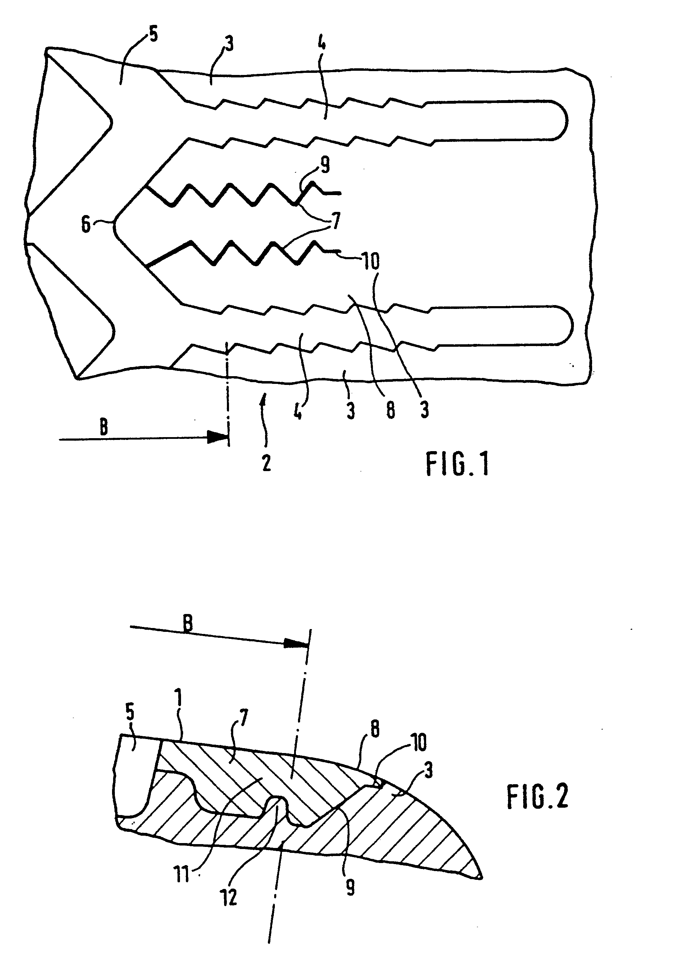

Wie aus Fig. 2 erkennbar ist, ist die Tiefe der Feineinschnitte 7 an ihren der Umfangsnut 5 zugekehrten Enden, etwa halb so groß wie im Mittelbereich der Feineinschnitte 7. Die den Rundschultern 8 zugekehrten Enden der Feineinschnitte 7 haben indessen eine Tiefe, die zu den Rundschultern 8 hin - bedingt durch eine Schräge 9 - allmählich abnimmt. Kurz bevor die Schräge 9 in die Rundschulter 8 übergeht, ist noch eine kleine Stufe 10 vorgesehen. Auch dieses Ende der Feineinschnitte 7 hat also eine geringere Tiefe, jedoch im Vergleich zu den anderen Enden mit dem Unterschied, daß sich die Tiefe allmählich verringert. Dieser Abschnitt, also der sich allmählich in der Tiefe ändernde Endabschnitt der Feineinschnitte 7 befindet sich dabei außerhalb des kritischen Laufflächenbereichs, also im Bereich der Rundschulter 8, die nur unter besonderen Fahrbedingungen mit der Fahrbahn in Berührung kommt.

Am Laufflächenrand ist bei 10 die Tiefe der Feineinschnitte 7 noch einmal verringert, um einen die Verformbarkeit des Blockes 3 beeinflussenden Zapfen 12 zu bilden.

## Patentansprüche

1. Fahrzeugluftreifen mit einem profilierten Laufstreifen, dessen Profilelemente (Blöcke 3) mit wellenförmigen Feineinschnitten (7) versehen sind, wobei sich die Profilelemente (3) und die Feineinschnitte quer zur Laufrichtung des Reifens erstrecken und die Endabschnitte der Feineinschnitte eine sich allmählich verringernde Tiefe haben und sich ausschließlich im Bereich der Schulter (8) des Reifens befinden, dadurch gekennzeichnet, daß bei einem Reifen mit Rundschultern (8) die Tiefe der Feineinschnitte (7) an den Laufflächenrändern (Grenze der Breite B) dadurch verringert ist (bei 11), daß der Grund dieser Feineinschnitte an dieser Stelle angehoben ist (bei 12).

2. Fahrzeugluftreifen nach Anspruch 1, dadurch gekennzeichnet, daß das der Laufflächenmitte zugekehrte Ende der Feineinschnitte (7) durch eine Stufung eine Tiefe aufweist, die etwa halb so groß ist wie diejenige im Mittelbereich der Feineinschnitte.

**Claims**

1. Pneumatic vehicle tyre having a profiled tread strip, the profile elements (blocks 3) of which are provided with undulatory fine indentations (7), wherein ths profils elements (3) and the fine indentations extend at right angles relative to the travel direction of the tyre, and wherein the and portions of the fine indentations have a gradually reducing depth and are exclusively situated in the region of the shoulder (B) of the tyre, characterised in that, in the case where a tyre has round shoulders (8), the depth of the fine indentations (7) at the edges of the tread surface (boundary of width B) is reduced (at 11) because the base of these fine indentations is raised at this location (at 12).

2. Pneumatic vehicle tyre according to claim 1, characterised in that the end of the fine indentations (7) facing the centre of the tread surface has, due to a stepped arrangement, a depth which is approximately half the depth in the central region of the fine indentations.

**Revendications**

1. Pneumatique pour véhicules comprenant un protecteur profilé, dont les éléments (blocs 3) présentent de fines entailles (7) ondulées, et dans lequel les éléments du profil (3) et les fines entailles sont perpendiculaires à la direction de roulement du pneumatique et les secteurs d'extrémité des fines entailles présentent une profondeur décroissant progressivement et se situent uniquement dans la zone des épaulements (8) du pneumatique, ce dernier étant caractérisé en ce que, dans le cas d'un pneumatique à épaulements ronds (8), la profondeur des entailles fines (7) est réduite sur les bords de la bande de roulement (limite 11 de la largeur B) par relèvement de leur fond en ces points (12).

2. Pneumatique pour véhicules selon revendication 1, caractérisé en ce que l'extrémité des entailles fines (7) en regard du centre de la bande de roulement présente du fait d'un palier une profondeur sensiblement moitié de celle dans leur partie médiane.

FIG.1

FIG.2